# EUROPEAN PATENT SPECIFICATION

(11) **EP 3 509 429 B1**
(45) Date of publication and mention of the grant of the patent: **01.11.2023**
(21) Application number: 17761887.3
(22) Date of filing: 06.09.2017
(51) Int. Cl.: A23G 9/44, A23G 9/48, A23G 9/50

(54) **A FROZEN CONFECTIONERY PRODUCT**
GEFRORENES SÜSSWARENPRODUKT
PRODUIT DE CONFISERIE CONGELÉ

(30) Priority: 12.09.2016 EP 16188320
(43) Date of publication of application: 17.07.2019
(73) Proprietor: Unilever IP Holdings B.V., 3013 AL Rotterdam (NL)
(72) Inventor: DEEPADUNG, Duangporn, Bangkok 10520 (TH); MANOPAKARAT, Visit, Bangkok 10520 (TH); SIHA, Oraphan, Bangkok 10520 (TH); SMITH, Alistair,David, Bedfordshire MK44 1LQ (GB)
(74) Representative: Warner, Guy Jonathan
(86) International application number: PCT/EP2017/072305
(87) International publication number: WO 2018/046520

(56) References cited:
- EP-A1- 0 322 469
- EP-A1- 1 597 974
- EP-A1- 2 586 316
- WO-A1-2013/037741
- WO-A1-2015/043932
- WO-A1-2015/086297
- WO-A1-2015/086345
- WO-A1-2016/087162
- CN-Y- 200 976 814
- KR-A- 20130 127 687
- US-A- 2 570 031
- US-A- 3 274 958
- US-A- 5 011 704

## Description

### Field of the invention

The present invention relates to a frozen confectionery product. More particularly, it relates to a to a frozen confectionery product comprising a peelable outer gel layer.

### Background of the invention

Frozen confectionery products are quite popular across all the age group of the consumer. However, consumers at the lower age group and especially children are having irresistible attraction towards frozen confectionery product. Therefore, there has always been efforts to provide frozen confectionery products in different formats to attract these consumers and satisfying their need.

One of those formats is peelable frozen confectionery products. There is prior art which discloses this particular format.

WO 2012/156539 (Nestle, 2012)) relates to a frozen confectionery products comprising a core consisting of a frozen confection, wherein the core is coated with a frozen flexible edible gel layer, characterized in that the gel layer is provided with at least one cutting line extending spirally over the gel layer, said cutting line allowing the gel-layer to be peeled off in a spiral. It furthermore relates to an apparatus for manufacturing same, and to a cutting device for use in that method.

WO 2013/064376 (Nestle, 2013) relates to a frozen confectionery product comprising a core consisting of a frozen confection, wherein the core is at least partially coated with a frozen flexible edible gel coating, said gel coating being provided with at least one cutting line allowing to peel-off the gel-coating, characterized in that the gel coating comprises at least two visually distinctive gel layers.

CN200976814 (WANG WENZHENG, 2007) discloses a peelable ice cream product consisting of an ice cream core and an edible flexible jelly outer layer provided with longitudinal cutting lines to facilitate peeling.

WO2015/086345 (NESTEC, 2015) discloses a frozen confection product comprising a core of a frozen confection, which is at least partially coated with a gel coating, characterized in that the gel coating has a layer of frozen liquid on the surface of the gel coating positioned between the coating and the core, or between two coatings.

KR 2013 0127687 A discloses a coated frozen confection product with cut out lines on the surface of the outer mixture of the frozen confection product.

EP 1 597 974 A1, US 5 011 704 A, WO 2013/037741 A1, US 3 274 958 A and US 2 570 031 A disclose frozen confection products with an inner core that may be a sauce; however, none of these frozen confections comprise a peelable outer gel layer.

Different processes for producing such peelable frozen confectionary products are also known in the art.

WO 2012/156538 (Nestle, 2012) relates to a cutting or embossing tool for frozen confectionery products comprising at least two elements, each element comprises a void with an inner contour corresponding to the outer contour of the product to be cut or embossed. At least one of the elements comprises at least one knife or embosser with a blade or an embossing surface extending along the inner contour of the void. The tool can be used to cut lines or a line pattern shape into the surface of a frozen confectionery product, in particular in coating.

WO 2015/043932 (Unilever, 2015) discloses heated tool to imprint a pattern on a frozen confectionery product, and especially a heated tool that melts away a channel of an outer coating layer of a frozen confectionery, thereby creating a peelable frozen confectionery product.

WO2015/086297 (UNILEVER, 2015) discloses a mould for the preparation of a frozen confection product that is suitable for making grooves in the outer layer of a frozen confectionery product. The grooves enable the frozen confection product to be peelable.

WO 2016/087162 A1 discloses a coating cutting tool for cutting the coating on the side of a frozen confection product.

However, a peelable frozen confectionery product, which has an internal liquid / semisolid core with intermediate layer of frozen confection is not known in the art. The consumers have always preferred food products, which release the internal liquid/semisolid substance while biting. There are candies (non-frozen) available with such liquid/semisolids core.

We have found that when a peelable frozen confectionery product with semi-solid/liquid inner core is manufactured using the known methods, it tends to destroy the architecture of the product while peeling. As a result of this the liquid/semisolid inner core substance comes out while peeling. In most of the known formats of peelable frozen confectionery product, the peeling starts from the top. This is particularly problematic when there is a liquid/semi-solid core inside the frozen confectionery product.

It is therefore an object of the present invention to provide a peelable frozen confectionery product with liquid/semisolid inner core.

It is a further object of the present invention to provide a peelable frozen confectionery product in which the liquid/semisolid inner core is not destabilized even while peeling the gel layer.

The present inventors while working on this problem have surprisingly found that when the peeling lines starts from the stick end of the frozen confectionery product, it does not create the problem of the destabilization of the liquid/semisolid inner core. Furthermore, the product of the present invention is able to maintain the liquid/semisolid inner core even at subzero temperatures.

### Summary of the invention

According to a first aspect of the present invention there is provided a peelable frozen confectionery product comprising;
i) a frozen body (10) with a top end (101) and a stick end (102) comprising;
   a) an outer gel layer (11);
   b) an intermediate layer of frozen confection (12);
   c) an inner core (13) comprises of a liquid or semisolid substance; and
ii) a stick element (14) partially inserted and attached with the frozen body (10) at the stick end (102);
   wherein the outer gel layer (11) is provided with at least two peeling lines (15) starting from the stick end (102) of the product, said peeling lines allowing to peel-off the gel outer layer (11) starting from the stick end (102) wherein the peeling lines (15) are extended up to 2/3^{rd} (two-thirds) of the length of the frozen body (10) starting from the stick end (102).

According to a second aspect of the present invention there is provided a process of manufacturing a peelable frozen confectionery product according to the first aspect of the invention comprising the steps of:
a. filling a mould comprising a container having a closed bottom section, a middle section and an open top section with a first composition comprising a gelling agent selected from a thermoreversible gelling biopolymer or a chemically setting gelling biopolymer or mixtures thereof,
b. leaving the composition to solidify against the wall of the container;
c. emptying remaining material from the mould;
d. filling the mould with a second composition comprising a frozen confectionery composition;
e. dropping a third composition comprising a liquid or semisolid substance into the second composition;
f. Inserting a stick element and leaving the material to solidify completely;
g. removing the solidified product from the mould; and
h. forming peeling lines on the surface of the outer gel layer wherein the peeling lines are extended up to 2/3^{rd} of the length of the frozen body starting from the stick end.

### Frozen confectionery product of the invention:

The present invention provides a peelable frozen confectionery product comprising;
i) a frozen body (10) with a top end (101) and a stick end (102) comprising;
   a) an outer gel layer (11);
   b) an intermediate layer of frozen confection (12);
   c) an inner core (13) comprises of a liquid or semisolid substance; and
ii) a stick element (14) partially inserted and attached with the frozen body (10) at the stick end (102);
   wherein the outer gel layer (11) is provided with at least two peeling lines (15) starting from the stick end (102) of the product, said peeling lines allowing to peel-off the gel outer layer (11) starting from the stick end (102) wherein peeling lines (15) are extended up to 2/3^{rd} (two-thirds) of the length of the frozen body (10) starting from the stick end (102). Unless defined otherwise, all technical and scientific terms used herein have the same meaning as commonly understood by one of ordinary skill in the art (e.g. in frozen food manufacture). Definitions and descriptions of various terms and techniques used in frozen confectionery manufacture are found in "Ice Cream", 6th Edition R.T. Marshall, HD. Goff and R.W. Hartel, Kluwer Academic / Plenum Publishers, New York 2003 and "The Science of Ice Cream", C.J. Clarke, Royal Society of Chemistry, Cambridge, 2004.

### The outer gel layer:

The peelable frozen confectionery product of the present invention comprises an outer gel layer. The outer layer is preferably made of a gelling substance. Therefore, the outer layer can also be called as outer gel layer or gel layer. It is preferred that at least the top and the sides are covered. It is preferred that the stick end (bottom) of the product is not covered with the outer gel layer. The product may be produced for example by coating a preformed frozen confection (12) comprising an inner core (13), with an outer gel layer (11) which is applied by dipping, spraying, or enrobing; or by means of a fill and suck process in a mould wherein a gel mix (gelling substance) is filled into a mould, the core sucked out and then re-filled with preformed frozen confection. The outer gel layer is provided with at least two peeling lines (15) starting from the stick end (102). The peeling lines allow easy peeling of strips of the gel layer starting from the stick end. This is contrary to the manner of peeling a banana peelable type frozen confectionery product. In the case of banana peelable type of product the peeling has to start from the top end of the product and not from the bottom end. The peeling off of the gel layer from the stick end is particularly advantageous for the product of the present invention, as the product comprises a liquid or semisolid inner core at the top end. The peeling off the gel layer from the top end with liquid or semisolid inner core tends to destroy the architecture of the product of the present invention. This results in destabilization of the liquid or semisolid inner core. We have found that when peeling line starts from the stick end (bottom part) this problem of destabilization of liquid or semisolid inner core does not arise. The peeling lines may be formed for example by cutting the outer gel layer after it has been formed, or, when the fill and suck method is used, by using a mould with suitable indentations, or also can be by way of heated blade type of tool. The most preferred way of forming the peeling line on the gel layer is by using heated blade type of tool which has been disclosed in WO 2015/043932 (Unilever). The peeling lines for the product of the present invention may preferably be vertical (i.e. parallel to the stick element) and upright.

The gel layer may be formed from a mixture which contains a gelling agent. The gelling agent may be a thermoreversible gelling biopolymer such as gelatine or agar. Alternatively, the gelling agent may be a chemically setting gelling biopolymer which derives its gel structure from an interaction between the biopolymer and an appropriate ion such as Ca²⁺. Examples include sodium alginate, carrageenan (iota- carrageenan, kappa- carrageenan) and pectin. The gelling agent could also be a synergistic combination of two or more biopolymers that may be individually non-gelling, but on mixing will form a gel or a gel of a higher modulus. Examples include: sodium alginate with pectin, xanthan with locust bean gum, agar with locust bean gum, and kappa carrageenan with locust bean gum. The gelling agent is present in an amount such that the gel is sufficiently strong for the gel layer to cohere so that it does not break apart too easily during peeling. The gel strength can be increased by increasing the amount of the gelling agent in the mix.

The gel may be formed by lowering the temperature (for thermally setting gelling agents) or by combining two separate mix streams, each of which contains one of the components of a chemically setting gelling agent. For example, the mix may be made in two parts, one containing sodium alginate and the other containing a source of Ca²⁺ions. When the two mixes are combined in the mould, the alginate reacts with the Ca²⁺ to form the gel.

Preferably the thickness of the outer gel layer is from 0.1 mm to 5 mm, more preferably from 0.5 mm to 5 mm, and most preferably 1 mm to 4 mm.

### The intermediate layer of frozen confection:

Frozen confections are sweet-tasting fabricated foodstuffs intended for consumption in the frozen state (i.e. under conditions wherein the temperature of the foodstuff is less than 0°C, and preferably under conditions wherein the foodstuff comprises a significant amount of ice). Frozen confections include water ices, fruit ices and milk ice which comprise water and/or milk solids and one or more of sugars, stabilisers, colours and flavours, fat or protein (e.g. less than 10 wt% of each, preferably less than 5 wt%). Frozen confections also include ice creams, frozen yoghurts, sorbets and the like.

### The inner core:

The frozen confectionery product of the present invention also comprises an inner core. The inner core comprises a third composition that is a liquid or semi solid substance. The liquid or semisolid substance is provided within the frozen confectionery product as an inner core for proving the consumer with a superior experience. On biting the frozen confectionery product of the present invention, the inner core comes out in a liquid or semisolid form within the frozen confection delivering a unique and superior experience to the consumer. There is no restriction as per the composition of the substance of the inner core. It can be of any flavors and colours. However, the substance is in liquid or semisolid form. As a preferably feature the inner core may comprise a chemically setting gelling biopolymer to adjust the liquidity of the inner core. The most preferred biopolymer being xanthum gum. The inner core comprises a third composition comprising xanthum gum. The inner core is a third composition comprising xanthum gum and is in a liquid or semisolid form at from - 2 °C to 25 °C.

Liquid or semisolid means that at the consumption temperature (- 2°C to 25°C) the inner core is able to maintain its fluidity. On biting, the inner core releases the third composition in the mouth in fluid form. The inner core may be frozen on storing at very low temperature (e.g. - 18°C). However, at the consumption temperature i.e. - 2°C to 25°C, preferably 0°C to 25°C, more preferably 5°C to 15°C it is able to maintain its fluidity.

Preferably, the inner core resides only in the 1/3^{rd} (one-third) of the frozen body (10) at the top end (101). More preferably, the inner core resides only in the ½ (half) of the frozen body at the top end. An inner core, which extends up to the 2/3^{rd} (two-thirds) portion of the frozen body is also preferably within the scope of the present invention. As a more preferably feature the inner core may resides anywhere in the top half of the frozen body without restricting to any particular position.

### Process of producing a peelable frozen confection of the present invention

The present invention also provides a process for a process of manufacturing a peelable frozen confectionery product comprising the steps of:
a. filling a mould comprising a container having a closed bottom section, a middle section and an open top section with a first composition comprising a gelling agent selected from a thermoreversible gelling biopolymer or a chemically setting gelling biopolymer or mixtures thereof,
b. leaving the composition to solidify against the wall of the container;
c. emptying remaining material from the mould;
d. filling the mould with a second composition comprising a frozen confectionery composition;
e. dropping a third composition comprising a liquid or semisolid substance into the second composition;
f. Inserting a stick element and leaving the product of step e. to solidify completely;
g. removing the solidified product of step f. from the mould; and,
h. forming peeling lines on the surface of the outer gel layer wherein the peeling lines are extended up to 2/3^{rd} of the length of the frozen body starting from the stick end.

Wherein the third composition of step e. is in a liquid or semisolid form at from -2 °C to 25 °C.

Wherein steps a. to c. correspond to the formation of the outer gel layer of the frozen confectionery product; step d. corresponds to the formation of the intermediate layer of frozen confectionery layer of the frozen confection product; and step e. corresponds to the formation of an inner core of the frozen confectionery product. Preferably the frozen confectionery product is a peelable frozen confection product.

In the first step of the process, a mould is taken. The mould comprises comprising a container having a closed bottom section, an open top section. The bottom section of the mould produces the top end (101) of the frozen body (10) and the open top section of the mould produces the stick end (102) of the frozen body. Then the mould is filled with a first composition comprising a gelling agent. This first composition corresponds to the peelable outer gel layer. The preferred composition of the gel layer and relevant things are already discussed in the previous section and bears the same meaning here.

The mould is preferably tapered to allow for easier removal of the frozen confection after moulding. The tapering of the middle section preferably being tapered such that the circumference of the of the middle section at the point where it meets the bottom section is at least 0.5% less than the circumference at the top of the middle section, preferably at least 1%, more preferably at least 2%, still more preferably at least 3%, or even at least 5%, but typically less than 50%, more preferably not more than 40%, still more preferably not more than 30%, even more preferably not more than 20%, even still more preferably not more than 10% or even not more than 6%.

The mould may be made from any commonly used material. The mould is preferably made of food safe materials. Preferred materials are metals, ceramic materials and plastics, such as low density or high density polyethylene. Preferred metals include, but are not limited to, metals and alloys such as stainless steel, brass, aluminium, titanium.

The total volume of the container is preferably between 10 mL and 200 mL, more preferably at least 20 mL, still more preferably at least 30 mL, or even at least 40 mL, while the container is preferably not more than 180 mL, still more preferably not more than 160 mL, or even not more than 140 mL.

The mould may be a single piece, but a mould comprising two halves or more parts that are connected together is also contemplated in the scope of the invention.

After the mould is filled with the first composition, it is left for some time which allows the solidification of the first composition which eventually forms the outer gel layer. Optionally and preferably for initiating quick solidification the mould with the first composition can be put inside a freezing media. Alternately, the mould may be cooled down before filling with the composition of the outer layer or after or both, preferably the mould is cooled down before the outer layer composition is added and is continuously cooled during the whole process until the confectionery of solidified. The outer layer composition then solidified against the outer wall of the container. Ideally and preferably, the layer is at least 1 mm thick, more preferably at least 2 mm, or even at least 3 mm thick, but preferably not more than 10 mm, more preferably not more than 8mm, still more preferably not more than 5 mm.

In a preferred embodiment the outer layer has a thickness that is the same as the depth of the peeling lines, plus or minus 50%, more preferably plus or minus 30%, still more preferably plus or minus 20%, even more preferably plus or minus 10%.

When the outer layer is thick enough, the remaining first composition is removed from the mould. This may be done by sucking the remaining first composition out, or by turning the mould upside down. Other conventional ways of removing excess first composition from the mould are also contemplated.

After formation of the outer gel layer in the mould, a second composition is poured into the mould. This second composition corresponds to the frozen layer of confection (12). The preferred composition of the frozen layer of confection and relevant things are already discussed in the previous section and bears the same meaning here.

After addition of the second composition into the mould, a third composition is dropped into the second composition. Preferably, the density difference between the second and third composition is such that the third composition settles down at the bottom of the mould within the second composition. This third composition corresponds to the inner core (13) comprises of a liquid or semisolid substance. The preferred composition of the inner core and relevant things are already discussed in the previous section and bears the same meaning here.

Preferably, the viscosity of the third composition i.e. the inner core is in the range from 4 to 6 Pa.s, more preferably 4.5 to 5.5 Pa.s at 5°C. The temperature of the third composition is preferably in the range of 2 to 15°C, more preferably in the range of 3 to 10°C and most preferably in the range of 4 to 10°C.

This is followed by inserting a stick element (14) into the mould within the second composition. Preferably the stick element positioned in such a manner that it maintains a gap between it and the inner core.

After that, the whole material in the mould is left for sometime for the solidification of the composition. This can be preferably carried out by keeping the mould with the composition in a freezing media. Any suitable freezing media can be used for this purpose.

After that, the solidified product is removed from the mould. This process of removing the frozen confectionery product from a mould is known as demoulding. Prior to demoulding the mould is preferably briefly heated. Without wishing to be bound by a theory it is thought that heating the mould prior to demoulding may cause the mould to slightly expand, making demoulding easier, and/or melt an outer film of the frozen confectionery product that allows for easier removal of the product. Ideally, the mould is preferably heated for at least 1 second, more preferably at least 2 seconds, or even at least 5 seconds, but typically less than a minute.

The heating may be done in any conventional may, for instance, the mould may be placed in a hot aqueous solution or the mould may be heated by a water jacket, or even by electricity. When heated with water, the water is preferably at least 5°C, more preferably at least 10°C, still more preferably at least 15°C, or even at least 20°C, but preferably less than 100°C, more preferably not more than 80°C, still more preferably not more than 70°C, or even not more than 60°C or even not more than 50°C.

After this step, the frozen confectionery product is subjected to a step of forming the peeling lines on the surface of the gel layer. This can be preferably done by heated blade tool as described in WO 2015/043932 (Unilever).

Alternately and preferably, the mould (the middle section) may have preformed inwardly protruding ridges, such that the peeling lines automatically forms when the gel layer solidifies. Hence, for such case no separate step is required for forming the peeling line after demoulding. After demoulding the frozen confectionery products comes out with peeling lines. The details of this process is described in WO 2015/086297 (Unilever). In this case the mould has at least two inwardly protruding ridges two produce at least two vertical peeling line on the surface of the gel layer.

Preferably, the peeling lines are vertical. As a further preferable feature, the peeling lines (15) are extended up to 2/3^{rd} (two-thirds), more preferably up to the ½ (half) of the length of the frozen body starting from the stick end (102). Alternately and more preferably the peeling line are extended up to such length of the frozen body that does not have the inner core. We have found that in this particular type of arrangement the core can be kept intact even while peeling. As a preferred embodiment, the peeling lines are extended only up to 2/3^{rd} (two-thirds) of the length of the frozen body and the inner core resides only in the 1/3^{rd} (one-third) length of the frozen body at the top.

Peeling lines preferably means either a cut or indentation or a grove on the surface of the frozen confection that allows the consumer to peel the outer gel layer of the frozen confection.

### Detailed description of the figures

The invention will now be demonstrated with the help of non-limiting figures.

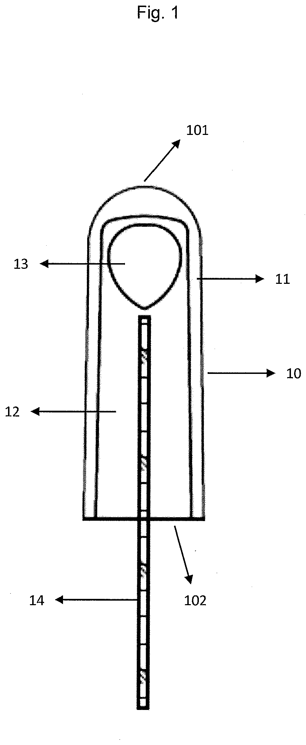

Referring to Figure 1, this represents a preferred embodiment of the frozen confectionery product according to the invention. The frozen confectionery product as represented in Figure 1 comprises a frozen body (10) with a top end (101) and a stick end (102). The frozen body (10) comprises (a) an outer gel layer (11); (b) an intermediate layer of frozen confection (12); an inner core (13). As can be seen from the figure, the inner core (13) is residing only in the top of the frozen body (10) and covering only ~ 1/3^{rd} (one-third) portion of the length of the frozen body. A stick element (14) is partially inserted and attached with the frozen body (10) at the stick end (102). As Figure 1 is a cross sectional view, hence no peeling line is visible in this figure. Peeling line has been provided on the gel layer (11).

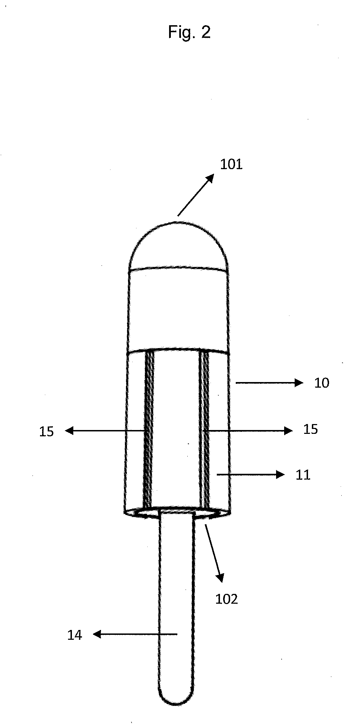

Now referring to Figure 2, this shows a perspective view of a preferred embodiment of the frozen confectionery product of the present invention as represented in Figure 1. The frozen confectionery product of the present invention comprises a frozen body (10) with a top end (101) and a stick end (102) as represented in the figure. The frozen body (10) comprises (a) an outer gel layer (11); (b) an intermediate layer of frozen confection (not visible in Figure 2); an inner core (not visible in Figure 2). A stick element (14) is partially inserted and attached with the frozen body (10) at the stick end (10.2). The gel layer (11) is provided with at least two peeling lines (15). These peeling lines allows the gel layer to be peeled off starting from the stick end (102). As a preferred feature, the peeling lines (15) are extended only up to the 2/3^{rd} (two-thirds) of the length of the frozen body starting from the stick end. The peeling lines as seen in the figure are in a vertical and upright position.

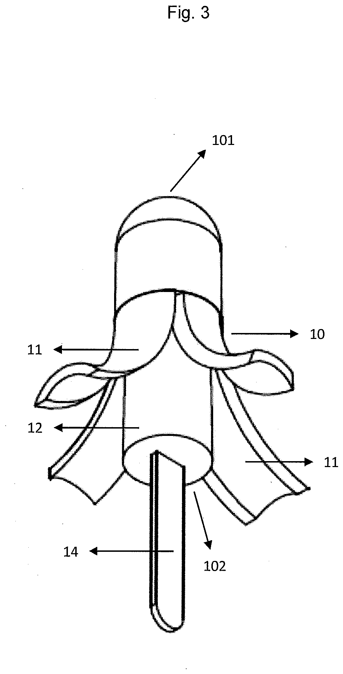

Further referring to Figure 3, this features a perspective view of a preferred embodiment of the frozen confectionery product of the present invention as represented in Figure 1 and 2 after peeling. As shown in the figure the frozen confectionery product of the present invention comprises a frozen body (10) with a top end (101) and a stick end (102). The outer gel layer (11), the intermediate layer of frozen confection (12) and the stick material (14) is visible in the provided view of Figure 3. The gel layer (11) is peeled off starting from the stick end (102) exposing the intermediate layer of ice (12).

### Examples

### Example1: Preparing frozen desert according to the present invention:

The product of this example comprises of an outer gel layer, an intermediate layer of frozen confection and an inner core comprising of a liquid or semisolid substance.

The details of each different portion of the frozen confectionery product of the present invention are given below:

### Outer gel layer:

**Table 1**

| Ingredients | Wt % |
|---|---|
| Sugar | 21 |
| Biopolymer (Carrageenan + locust bean gum) | 1 |
| Flavor and Colour | 0.3 |
| Citric acid | 0.4 |
| Water | To 100 |

The Jelly composition (outer gel layer) was prepared by heating the water to 85°C and adding part of the sugar and the stabilizer at the ratio of 10: 1. The mixture was then mixed for 2 minutes, before adding the remaining sugars. This mixture was stirred for 10 minutes. The other (minor) ingredients (except the flavour ingredient) were added, followed by the colour ingredient. This composition was stirred at 65°C for 2 minutes and pasteurized at 81°C for 30 sec. Then the flavour was added after pasteurization.

### Intermediate laver of frozen confection:

**Table 2**

| Ingredients | Wt % |
|---|---|
| Sugar | 12.5 |
| Skimmed milk powder | 3 |
| Palm oil | 4.5 |
| glucose syrup | 4 |
| Flavors and colours | 0.2 |
| Stabilizers | 0.3 |
| Water | To 100 |

The intermediate layer of frozen confection was prepared as follows. The water was heated to 60°C. Then sugar, stabilizer, milk powder, whey powder and oil were slowly added to the tank under agitation to ensure even dispersion of these ingredients. The resulting mixture was pasteurized at 70°C for 20 minutes and homogenised before cooling down the composition to 4°C and age for 24h.

### Inner core:

**Table 3**

| Ingredients | Wt % |
|---|---|
| Sugar | 40 |
| Skimmed milk powder | 4 |
| Xanthan gum | 0.2 |
| Tapioca starch | 1.5 |
| Cocoa powder | 3 |
| Flavors and colours | 0.5 |
| Water | To 100 |

The inner core was prepared by heating the water to 60°C. Then the other ingredients were slowly added to the tank under agitation to ensure even dispersion of these ingredients. The resulting mixture was pasteurized at 70°C for 20 minutes and homogenised before cooling down.

The frozen confectionery product was made by pouring 51 mL of liquid jelly composition (at 55°C) into a frozen mould comprising a container having a closed bottom section, an open top section. Then the composition of the outer gel layer as described above was poured into the mould. The jelly was given time to freeze against the mould walls, to form a jelly layer of approximately 3 mm before sucking out the excess liquid jelly composition. This forms the outer gel layer. The composition of the intermediate layer of frozen confection then added into the mould, which already had the frozen gel layer. Immediately after this 3.5 mL (at 4°C) of the inter core composition was dropped inside the composition of the frozen confection. The inner core settled at the bottom of the mould just beneath the gel layer. The whole frozen confectionery product was frozen in the mould. A stick was inserted and the layered frozen confectionery product was demoulded. After this, the peeling lines were made using the heated blade tool as described in WO 2015/043932.

### Example2: Measurement of the viscosity of the inner core:

The viscosity of the inner core composition (as prepared according to Table 3) was measured at different temperatures using a Brookfield viscometer (Model - DV-II + Pro), Spindle No. 4 at a speed of 30 rpm. The results of these experiments are summarized below in Table 4:

**Table 4**

| Temperature (°C) | Viscosity(Pa.s) |
|---|---|
| -2 | 8.12 |
| 0 | 5.97 |
| 3 | 5.31 |
| 5 | 5.02 |
| 12 | 3.90 |

From the above table it is evident that the inner core is able to maintain the required fluidity.

### Example 3: Consumer testing

Two different sets of frozen confectionery products were prepared as follows:
- The first set of products were prepared as per the present invention with peeling lines starting from the stick end with outer layer of gel, intermediate layer of frozen confection and an inner core.
- The second set of products were prepared wherein the peeling line starts from the top. However, the architecture of the product was same as the first set.

These two sets of products were given to five different people to check for the ease of peelability and the stability of the inner core.

It was found that the first set of product is easy to peel when compared with the second set of product. It was also found that for the second set of product there is a tendency of the liquid/semisolid core to destabilize (come out) while peeling.

## Claims

1. A peelable frozen confectionery product comprising;
i) a frozen body (10) with a top end (101) and a stick end (102) comprising;
a) an outer gel layer (11);
b) an intermediate layer frozen confection (12);
c) an inner core (13) comprising of a liquid or semisolid substance; and
ii) a stick element (14) partially inserted and attached with the frozen body (10) at the stick end (102);
wherein the outer gel layer (11) is provided with at least two peeling lines (15) starting from the stick end (102) of the product, said peeling lines allowing to peel-off the gel outer layer (11) starting from the stick end (102)
wherein the peeling lines (15) are extended up to 2/3^{rd} of the length of the frozen body (10) starting from the stick end (102).

2. A product according to claim 1, wherein the thickness of the outer gel layer (11) is from 0.5 mm to 5 mm.

3. A product according to any one of preceding claims 1 or 2, wherein the outer gel layer (11) is provided with at least three peeling lines (15).

4. A product according to any one of the preceding claims, wherein the inner core (13) resides only in the 1/3^{rd} of the frozen body (10) at the top end (101).

5. A process for manufacturing a peelable frozen confectionery product according to any one of the preceding claims 1 to 4 comprising the steps of:
a. filling a mould comprising a container having a closed bottom section, a middle section and an open top section with a first composition comprising a gelling agent selected from a thermoreversible gelling biopolymer or a chemically setting gelling biopolymer or mixtures thereof,
b. allowing the first composition to solidify against the wall of the container;
c. emptying remaining first composition from the mould;
d. filling the mould with a second composition comprising a frozen confectionery composition;
e. dropping a third composition comprising a liquid or semisolid substance into the second composition;
f. Inserting a stick element into the frozen confection body and leaving the product of step (e) to solidify completely;
g. removing the solidified product of step f. from the mould; and
h. forming peeling lines on the surface of the outer gel layer wherein the peeling lines are extended up to 2/3^{rd} of the length of the frozen body starting from the stick end.

6. A process according to claim 5, wherein the peeling lines are formed by impressing a set of heated blades into the outer layer .

7. A process according to claim 5, wherein the middle section of the container of the mould comprises at least two inwardly protruding ridges.

8. A process according to claims 5 to 7, wherein the thermoreversible gelling biopolymer of step a. is selected from the group consisting of gelatine and agar.

9. A process according to claims 5 to 7, wherein the chemically setting gelling biopolymer of step a. is selected from the group consisting of sodium alginate, carrageenan and pectin.

10. A process according to claims 5 to 9, wherein the temperature of the third composition of step e. is from 2 to 15°C.

11. A process according to claims 5 to 10, wherein the viscosity of the third composition of step f. is from 4 to 6 Pa.s at 5°C.

12. A process according to claim 5 or 11, wherein the third composition comprises a chemically setting gelling biopolymer.

13. A process according to claim 12 wherein the chemically setting gelling biopolymer is xanthan gum.

## Patentansprüche

1. Schälbares gefrorenes Süßwarenprodukt, das Folgendes umfasst:
i) einen gefrorenen Körper (10) mit einem oberen Ende (101) und einem Stielende (102), der Folgendes umfasst;
a) eine Gelaußenschicht (11);
b) eine gefrorene Konfektzwischenschicht (12) und
c) einen Innenkern (13), der eine Flüssigkeit oder eine halbfeste Substanz umfasst, und
ii) ein Stielelement (14), das beim Stielende (102) teilweise in den gefrorenen Körper (10) eingesetzt und an ihm befestigt ist, wobei
die Gelaußenschicht (11) mit mindestens zwei Schällinien (15) versehen ist, die vom Stielende (102) des Produkts ausgehen, wobei die Schällinien ermöglichen, die Gelaußenschicht (11) vom Stielende (102) beginnend abzuschälen, und
die Schällinien (15) beginnend am Stielende (102) sich bis zu 2/3 der Länge des gefrorenen Körpers (10) erstrecken.

2. Produkt nach Anspruch 1, wobei die Dicke der Gelaußenschicht (11) im Bereich von 0,5 mm bis 5 mm liegt.

3. Produkt nach einem der vorhergehenden Ansprüche 1 oder 2, wobei die Gelaußenschicht (11) mit mindestens drei Schällinien (15) versehen ist.

4. Produkt nach einem der vorhergehenden Ansprüche, wobei der Innenkern (13) sich lediglich in dem 1/3 des gefrorenen Körpers (10) am oberen Ende (101) befindet.

5. Prozess zum Herstellen eines schälbaren gefrorenen Süßwarenprodukts nach einem der vorhergehenden Ansprüche 1 bis 4, der die folgenden Schritte umfasst:
a. Füllen einer Form, die einen Behälter umfasst, der einen geschlossenen unteren Abschnitt, einen mittleren Abschnitt und einen offenen oberen Abschnitt aufweist, mit einer ersten Zusammensetzung, die ein Geliermittel umfasst, das aus einem thermoreversiblen Gelierungsbiopolymer oder einem chemisch abbindenden Gelierungsbiopolymer oder Mischungen davon gewählt ist,
b. Ermöglichen, dass die erste Zusammensetzung sich an der Wand des Behälters verfestigt;
c. Leeren der verbleibenden ersten Zusammensetzung aus der Form,
d. Füllen der Form mit einer zweiten Zusammensetzung, die eine gefrorene Süßwarenzusammensetzung umfasst,
e. Tropfen einer dritten Zusammensetzung, die eine Flüssigkeit oder eine halbfeste Substanz umfasst, in die zweite Zusammensetzung,
f. Einsetzen eines Stielelements in den gefrorenen Konfektkörper und Belassen des Produkts von Schritt (e) zum vollständigen Verfestigen;
g. Entfernen des verfestigten Produkts von Schritt f. aus der Form und
h. Bilden von Schällinien an der Oberfläche der Gelaußenschicht, wobei die Schällinien beginnend am Stielende sich über bis zu 2/3 der Länge des gefrorenen Körpers erstrecken.

6. Prozess nach Anspruch 5, wobei die Schällinien durch Eindrücken eines Satzes erhitzter Klingen in die Außenschicht gebildet werden.

7. Prozess nach Anspruch 5, wobei der mittlere Abschnitt des Behälters der Form mindestens zwei nach innen vorstehende Erhebungen umfasst.

8. Prozess nach den Ansprüche 5 bis 7, wobei das thermoreversible Gelierungsbiopolymer von Schritt a. aus der Gruppe gewählt ist, die aus Gelatine und Agar besteht.

9. Prozess nach den Ansprüche 5 bis 7, wobei das chemisch abbindende Gelierungsbiopolymer von Schritt a. aus der Gruppe gewählt ist, die aus Natriumalginat, Carrageen und Pektin besteht.

10. Prozess nach den Ansprüche 5 bis 9, wobei die Temperatur der dritten Zusammensetzung von Schritt e. im Bereich von 2 bis 15 °C liegt.

11. Prozess nach den Ansprüche 5 bis 10, wobei die Viskosität der dritten Zusammensetzung von Schritt f. bei 5 °C im Bereich von 4 bis 6 Pa.s liegt.

12. Prozess nach Anspruch 5 oder 11, wobei die dritte Zusammensetzung ein chemisch abbindendes Gelierungsbiopolymer umfasst.

13. Prozess nach Anspruch 12, wobei das chemisch abbindende Gelierungsbiopolymer Xanthan ist.

## Revendications

1. Produit de confiserie congelée pelable comprenant ;
i) un corps congelé (10) avec une extrémité de haut (101) et une extrémité de bâtonnet (102) comprenant ;
a) une couche de gel externe (11) ;
b) une confiserie congelée de couche intermédiaire (12) ;
c) un noyau interne (13) comprenant une substance liquide ou semi-solide ; et
ii) un élément de bâtonnet (14) partiellement inséré et fixé au corps congelé (10) à l'extrémité de bâtonnet (102) ;
dans lequel la couche de gel externe (11) est munie d'au moins deux lignes de pelage (15) partant de l'extrémité de bâtonnet (102) du produit, lesdites lignes de pelage permettant le pelage de la couche externe de gel (11) en partant de l'extrémité de bâtonnet (102)
dans lequel les lignes de pelage (15) sont étendues vers le haut jusqu'aux 2/3 de la longueur du corps congelé (10) en partant de l'extrémité de bâtonnet (102).

2. Produit selon la revendication 1, dans lequel l'épaisseur de la couche de gel externe (11) est de 0,5 mm à 5 mm.

3. Produit selon l'une quelconque des revendications 1 ou 2 précédentes, dans lequel la couche de gel externe (11) est munie d'au moins trois lignes de pelage (15).

4. Produit selon l'une quelconque des revendications précédentes, dans lequel le noyau interne (13) réside uniquement dans le 1/3 du corps congelé (10) à l'extrémité de haut (101).

5. Procédé pour la fabrication d'un produit de confiserie congelée pelable selon l'une quelconque des revendications 1 à 4 précédentes comprenant les étapes consistant à :
a. remplir un moule comprenant un récipient présentant une section de fond fermée, une section milieu et une section de haut ouverte avec une première composition comprenant un agent gélifiant choisi parmi un biopolymère gélifiant thermoréversible ou un biopolymère gélifiant chimiquement durcissable ou des mélanges de ceux-ci,
b. laisser la première composition se solidifier contre la paroi du récipient ;
c. vider la première composition restante du moule ;
d. remplir le moule avec une seconde composition comprenant une composition de confiserie congelée ;
e. faire tomber une troisième composition comprenant une substance liquide ou semi-solide dans la seconde composition ;
f. insérer un élément de bâtonnet dans le corps de confiserie congelée et laisser le produit de l'étape (e) solidifier complètement ;
g. éliminer le produit solidifié de l'étape f. du moule ; et
h. former des lignes de pelage sur la surface de la couche de gel externe dans lequel les lignes de pelage sont étendues vers le haut jusqu'aux 2/3 de la longueur du corps congelé en partant de l'extrémité de bâtonnet.

6. Procédé selon la revendication 5, dans lequel les lignes de pelage sont formées par impression d'un jeu de lames chauffées dans la couche externe.

7. Procédé selon la revendication 5, dans lequel la section milieu du récipient du moule comprend au moins deux nervures faisant saillie vers l'intérieur.

8. Procédé selon les revendications 5 à 7, dans lequel le biopolymère gélifiant thermoréversible de l'étape a. est choisi dans le groupe consistant en gélatine et agar.

9. Procédé selon les revendications 5 à 7, dans lequel le biopolymère gélifiant chimiquement durcissable de l'étape a. est choisi dans le groupe consistant en alginate de sodium, carraghénane et pectine.

10. Procédé selon les revendications 5 à 9, dans lequel la température de la troisième composition de l'étape e. est de 2 à 15°C.

11. Procédé selon les revendications 5 à 10, dans lequel la viscosité de la troisième composition de l'étape f. est de 4 à 6 Pa.s à 5°C.

12. Procédé selon la revendication 5 ou 11, dans lequel la troisième composition comprend un biopolymère gélifiant chimiquement durcissable.

13. Procédé selon la revendication 12, dans lequel le biopolymère gélifiant chimiquement durcissable est la gomme xanthane.
